# EUROPEAN PATENT APPLICATION

(11) **EP 1 128 696 A1**
(43) Date of publication of application: **29.08.2001**
(21) Application number: 00440057.8
(22) Date of filing: 25.02.2000
(51) Int. Cl.: H04Q 7/38

(54) **Customised information exchange in a wireless telecommunication system**

(71) Applicant: ALCATEL, 75008 Paris (FR)
(72) Inventor: Kopp, Dieter, 75418 Iilingen (DE); Knoblich, Ulf, 55765 Birkenfeld (DE); Sienel, Jürgen, 71229 Leonberg (DE)
(74) Representative: van Bommel, Jan Peter

(57) **Abstract**

Known telecommunication systems comprising a network-device and a terminal coupled via a wireless link for exchanging information can be made more flexible and more individualized by storing a terminal-definition code in said network-device for defining terminal-characteristics, whereby at least a first part of said information should be made dependent upon said terminal-definition code. Preferably, a preferences code is also stored, whereby at least a second part of said information should be made dependent upon said preferences code. A third part of said information may comprise (distributed) speech (recognition) signals. Both codes could further be made adjustable by a user.

## Description

The invention relates to a telecommunication system comprising a network-device and a terminal coupled via a wireless link for exchanging information.

Such a telecommunication system is known in the form of for example a DECT system, with said network-device being a DECT basestation and with said terminal being a DECT terminal, or in the form of for example a GSM system, with said network-device being a GSM basestation or a GSM mobile switching center and with said terminal being a GSM terminal, or in the form of for example a future UMTS system etc. Such a network-device could have a switch function, and/or a router function, and/or a bridge function, for example.

Such a telecommunication system is disadvantageous, inter alia, due to being flexible insufficiently.

It is an object of the invention, inter alia, to provide a telecommunication system as described in the preamble, which is more flexible.

Thereto, the telecommunication system according to the invention is characterised in that said network-device comprises a memory for storing a terminal-definition code, with at least a first part of said information being dependent upon said terminal-definition code.

By introducing said terminal-definition code for defining for example terminal-characteristics, like for example a size of a display and/or display possibilities, at least said first part of said information is made dependent upon this terminal-definition code, like a weather forecast message being small (for example three words) in response to a terminal-definition code defining a small display and a weather forecast message being large (for example ten words and/or a drawing) in response to a terminal-definition code defining a large(r) display. Or like traffic information disclosing just the traffic jams in response to a terminal-definition code defining a small display and traffic information disclosing traffic jams as well as road conditions (including a drawing) response to a terminal-definition code defining a large(r) display.

The invention is based on the insight, inter alia, that individualized terminals should get individualized treatment.

The invention solves the problem, inter alia, of providing a telecommunication system which is more flexible, for example in view of being able to individualize information to be sent from network-device to terminal.

A first embodiment of the telecommunication system according to the invention is characterised in that said memory comprises a preferences code, with at least a second part of said information being dependent upon said preferences code.

By introducing said preferences code for defining for example user-preferences and/or terminal-preferences, like for example a screen layout to be selected in response to a user-identification and/or terminal-identification (like for example a telephone number) and/or acoustical options, at least a second part of said information is made dependent upon said preferences code, like a first user of a terminal and/or a user of a first terminal getting a first screen layout (having a first background and/or first (group of) color(s) and/or first images etc.) and a second user of a terminal and/or a user of a second terminal getting a second screen layout (having a second background and/or second (group of) color(s) and/or second images etc.). Or like a first user of a terminal and/or a user of a first terminal getting a message on a display and a second user of a terminal and/or a user of a second terminal getting a message via a loudspeaker.

A second embodiment of the telecommunication system according to the invention is characterised in that said first part and said second part at least partly coincide.

By making said coinciding part dependent upon both said terminal-definition code as well as said preferences code, there is a maximum of individualisation.

A third embodiment of the system according to the invention is characterised in that at least a third part of said information comprises speech signals, with said third part being at least partly different from at least one of said first part and said second part.

Contrary to said first part and said second part, which mainly are transmitted from network-device to terminal, of said third part a first subpart will flow from terminal to network-device, and a second subpart will flow vice versa. In case of said speech signals being distributed speech recognition signals, preprocessing will take place in said terminal and final processing will take place in said network-device.

A fourth embodiment of the system according the invention is characterised in that at least one of said terminal-definition code and said preferences code is adjustable.

In this case a user can adjust at least one of said codes, preferably via said terminal, or via an other communication channel (pc + website, email, letter, fax etc.) coupled to said network-device.

The invention further relates to a network-device for exchanging information with a terminal via a wireless link.

The network-device according to the invention is characterised in that said network-device comprises a memory for storing a terminal-definition code, with at least a first part of said information being dependent upon said terminal-definition code.

A first embodiment of the network-device system according to the invention is characterised in that said memory comprises a preferences code, with at least a second part of said information being dependent upon said preferences code.

A second embodiment of the network-device according to the invention is characterised in that said first part and said second part at least partly coincide.

A third embodiment of the network-device according to the invention is characterised in that at least a third part of said information comprises speech signals, with said third part being at least partly different from at least one of said first part and said second part.

A fourth embodiment of the network-device according to the invention is characterised in that at least one of said terminal-definition code and said preferences code is adjustable.

The patent US 5,809,464 discloses a dictating mechanism based upon distributed speech recognition, and the patent US 5,838,775 discloses a telecommunication system for fixed (wired) telecommunication offering user-dependent screen layouts. The patents EP 90727X with X = 1, 2, 3, 4 or 5 disclose fixed (wired) screenphone systems. Neither one of these documents discloses the telecommunication system according to the invention. Further background information is disclosed in EP 99440202.2, EP 99440201.4, EP 99440203.0, EP 99440291.5 (defining HomeRF systems). All references including further references cited with respect to and/or inside said references are considered to be incorporated in this patent application.

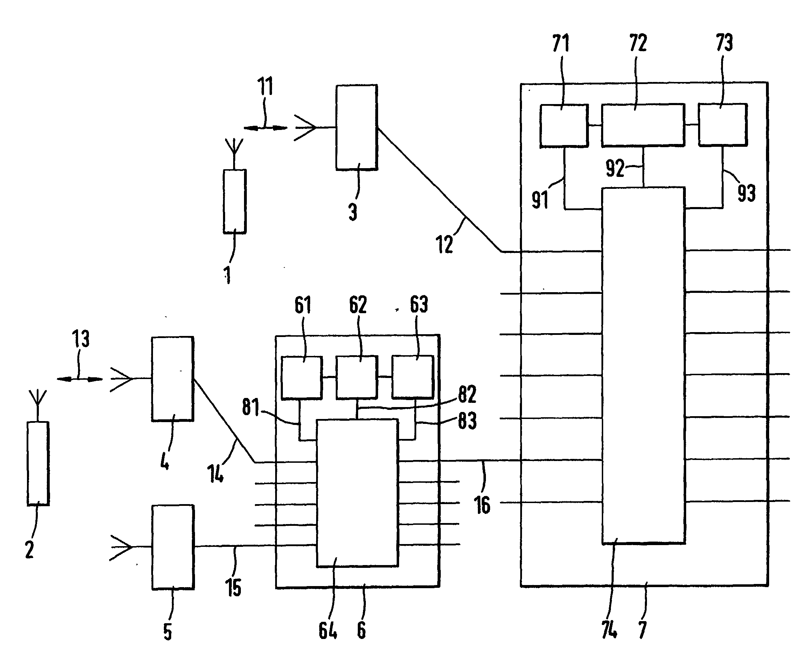

The invention will be further explained at the hand of an embodiment described with respect to a drawing, whereby
figure 1 discloses a telecommunication system according to the invention comprising a network-device according to the invention.

The telecommunication system according to the invention shown in figure 1 comprises a (DECT) terminal 1 and a (DECT) basestation 3 coupled via a wireless link 11, which basestation 3 is coupled to a (fixed) switch 7 via a link 12, and comprises a (GSM) terminal 2 coupled to a (GSM) basestation 4 via a wireless link 13, which basestation 4 is coupled to a (mobile) switch 6 via a link 14, which switch 6 is coupled to a further (GSM) basestation 5 via a link 15 and which switch 6 is coupled to switch 7 via a link 16. Switch 6 comprises a connector 64 coupled to links 14, 15 and 16 and other links not numbered and to internal links 81, 82 and 83 respectively which are coupled to a memory 61, a processor 62 and an adaptor/selector 63 respectively. Processor 62 is coupled to memory 61 and to adaptor/selector 63 via control links. Switch 7 comprises a connector 74 coupled to links 12 and 16 and other links not numbered and to internal links 91, 92 and 93 respectively which are coupled to a memory 71, a processor 72 and an adaptor/selector 73 respectively. Processor 72 is coupled to memory 71 and to adaptor/selector 73 via control links.

The telecommunication system according to the invention comprising at least one terminal (1 and/or 2) and at least one network-device (basestations 3 and/or 4 and/or 5 and/or switches 6 and/or 7) according to the invention as shown in figure 1 functions as follows.

According to a first embodiment, terminal 1 and terminal 2 have been subscribed to for example a weather forecast generator for receiving for example each hour a (part of a) weather forecast message. This message comprises for example a text and a drawing and acoustical information and the telephone number of terminal 1 and/or a first destination code defining terminal 1 and/or its user and the telephone number of terminal 2 and/or a second destination code defining terminal 2 and/or its user and arrives at connector 74 of switch 7, after which processor 72 is informed via link 92 of said arrival.

Processor 72 detects the telephone number of terminal 1 and/or said first destination code in said message, and in response consults memory 71, which in response to said telephone number of terminal 1 and/or first destination code generates a first terminal-definition code defining terminal-characteristics of terminal 1 and possibly a first preferences code. In response to said first terminal-definition code and possibly said first preferences code, which via processor 72 are supplied to adaptor/selector 73, said message is supplied via connector 74 and link 93 to adaptor/selector 73 under control of processor 72. In response to said first terminal-definition code for example defining that terminal 1 is a wireless screenphone having a large display and that basestation 3 comprises a residential gateway in a HomeRF system (see also EP 99440202.2, EP 99440201.4, EP 99440203.0, EP 99440291.5), adaptor/selector 73 selects said text and drawing and adapts said text into a long version. Or in response to said first terminal-definition code for example defining that terminal 1 is a small wireless telephone having a small display, adaptor/selector 73 selects said text (not said drawing) and adapts said text into a short version. In response to said first preferences code for example defining that said user wants to receive acoustical info too for which he will be billed, adaptor/selector 73 selects said acoustical information. As a result, all selected information flows via link 93 and connector 74 under control of processor 72 via link 12 to basestation 3, which sends said selected information to terminal 1 via wireless link 11.

Processor 72 detects the telephone number of terminal 2 and/or said second destination code in said message, and in response consults memory 71, which in response to said telephone number of terminal 2 and/or second destination code generates a second terminal-definition code defining terminal-characteristics of terminal 2 and possibly a second preferences code. In response to said second terminal-definition code and possibly said second preferences code, which via processor 72 are supplied to adaptor/selector 73, said message is supplied via connector 74 and link 93 to adaptor/selector 73 under control of processor 72. In response to said second terminal-definition code for example defining that terminal 2 is a mobile GSM organizer having a large display, adaptor/selector 73 selects said text and drawing and adapts said text into a long version. Or in response to said second terminal-definition code for example defining that terminal 2 is a small mobile GSM telephone having a small display, adaptor/selector 73 selects said text (not said drawing) and adapts said text into a short version. In response to said second preferences code for example defining that said user does not want to receive acoustical info too for which he is to be billed, adaptor/selector 73 does not select said acoustical information. As a result, all selected information flows via link 93 and connector 74 under control of processor 72 via link 16 to switch 6, where said selected information arrives at connector 64 and is detected by processor 62, which controls connector 64 in such a way that said selected information flows via connector 64 and link 14 to basestation 4 (due to switch 6 knowing near which basestation terminal 2 is located closestly), which sends said selected information to terminal 2 via wireless link 13 (signalling channel and/or speech channel and/or data channel).

According to a first alternative to said first embodiment, processor 72 detects the telephone number of terminal 2 and/or said second destination code in said message, and in response controls connector 74 in such a way that said message is sent to switch 6 via link 16. There, processor 62 is informed via link 82 of the arrival of said message, and detects the telephone number of terminal 2 and/or said second destination code in said message. In response, processor 62 consults memory 61, which in response to said telephone number of terminal 2 and/or second destination code generates a second terminal-definition code defining terminal-characteristics of terminal 2 and possibly a second preferences code. In response to said terminal-definition code and possibly said preferences code, which via processor 62 are supplied to adaptor/selector 63, said message is supplied via connector 64 and link 83 to adaptor/selector 63 under control of processor 62. In response to said second terminal-definition code for example defining that terminal 2 is a mobile GSM organizer having a large display, adaptor/selector 63 selects said text and drawing and adapts said text into a long version. Or in response to said second terminal-definition code for example defining that terminal 2 is a small mobile GSM telephone having a small display, adaptor/selector 63 selects said text (not said drawing) and adapts said text into a short version. In response to said second preferences code for example defining that said user does not want to receive acoustical info too for which he is to be billed, adaptor/selector 63 does not select said acoustical information-. As a result, all selected information flows via link 83 and connector 64 under control of processor 62 via link 14 to basestation 4 (due to switch 6 knowing near which basestation terminal 2 is located closestly), which sends said selected information to terminal 2 via wireless link 13 (signalling channel and/or speech channel and/or data channel).

According to a second alternative to said first embodiment, at least one of said terminal-definition code and said preferences code is adjustable, for example via a terminal, by generating an adjustment signal destined for said processor and/or memory, by using the keyboard and/or speech, possibly in addition with user identification and/or user authentication to be realised via a user signal (voice recognition and/or a pin code and/or a smart card and/or a finger print etc.). Said adjustment signal could also be generated inside said switch, for example in response to a user having visited a web site and/or an email and/or letter and/or fax etc.

According to a third alternative to said first embodiment, at least one of said terminal-definition code and said preferences code is made user identification dependent and/or user authentication dependent and/or time dependent. Said user identification dependency and/or user authentication dependency could again be realised via a user signal (voice recognition and/or a pin code and/or a smart card and/or a finger print etc.), whereby either this is to be done each time said terminal-definition code and/or said preferences code is to be generated, or only once every time a terminal gets an other user. Said time dependency could be realised via a timing signal and/or clock signal for example to be generated inside said switch by a generator for generating timing signals and/or clock signals, with a comparator being used for comparing said timing signals and/or clock signals with a predefined signal for in response to a comparison result adjusting said terminal-definition code and/or preferences code. Preferably, at least one of said dependencies is adjustable by said user, as described before.

According to a second embodiment, terminal 2 on the one hand and basestations 4 and 5 and switch 6 on the other hand are based upon distributed speech recognition or DSR, with terminal 2 comprising a preprocessing unit and either at least basestations 4 and 5 or switch 6 comprising a final processing unit. Then, first speech signals after being preprocessed in terminal 2 will via wireless link 13 be transmitted to basestation 4 and switch 6, whereby final processing will take place in either basestation 4 or switch 6, after which the coded first speech signals can be transmitted to for example a third terminal not shown via link 15 and basestation 5 or to for example a fourth terminal not shown via switch 7 and link 16, etc. And coded second speech signals originating from for example said third terminal or coming from for example switch 7 will, via connector 64 and link 14 and basestation 4 (due to switch 6 knowing near which basestation terminal 2 is located closestly) and wireless link 13 be transmitted to terminal 2. Both said coded first and second speech signals, but in particular said coded second speech signals, can thereby flow via connector 64 and link 83 to adaptor/selector 63 and vice versa, such that at least a part can be amended and/or selected in dependence of said terminal-definition code and/or said preferences code. In this case, said terminal-definition code defines for example certain acoustical characteristics of a terminal, and said preferences code for example defines certain acoustical characteristics of a user.

According to an alternative to said second embodiment, said terminal-definition code and/or said preferences code is further used for encryption purposes, either at least for said coded second speech signals, which then will need to be decrypted in said terminal 2, or at least for said coded first speech signals, which then will need to be decrypted in said third terminal or said fourth terminal or a further switch not shown.

According to a third embodiment, said terminal 1 and/or 2 comprise a terminal memory for storing at least one of said terminal-definition code and said preferences code, whereby for each communication or on a regular basis or at least once after activation of said terminal this code is sent to said memory located in said network-device.

According to an alternative to said third embodiment, said terminal-definition code and/or said preferences code is to be negotiated by said terminal and said network-device, for each communication or on a regular basis or at least once after activation of said terminal.

All embodiments are just embodiments and do not exclude other embodiments not shown and/or described. All alternatives are just alternatives and do not exclude other alternatives not shown and/or described. Each at least two (parts of) embodiments and/or each at least two (parts of) alternatives and/or each single (part of an) embodiment and single (part of an) alternative can be combined into a new combination. This all without departing from the scope of the invention. For example functions of switch 7 can be shifted into switch 6 and vice versa, and functions of switches 6 and/or 7 can be shifted into basestations 3 and/or 4 and/or 5, and vice versa.

## Claims

1. Telecommunication system comprising a network-device and a terminal coupled via a wireless link for exchanging information, characterised in that said network-device comprises a memory for storing a terminal-definition code, with at least a first part of said information being dependent upon said terminal-definition code.

2. Telecommunication system according to claim 1, characterised in that said memory comprises a preferences code, with at least a second part of said information being dependent upon said preferences code.

3. Telecommunication system according to claim 2, characterised in that said first part and said second part at least partly coincide.

4. Telecommunication system according to claim 1, 2 or 3, characterised in that at least a third part of said information comprises speech signals, with said third part being at least partly different from at least one of said first part and said second part.

5. Telecommunication system according to claim 1, 2, 3 or 4, characterised in that at least one of said terminal-definition code and said preferences code is adjustable.

6. Network-device for exchanging information with a terminal via a wireless link, characterised in that said network-device comprises a memory for storing a terminal-definition code, with at least a first part of said information being dependent upon said terminal-definition code.

7. Network-device system according to claim 6, characterised in that said memory comprises a preferences code, with at least a second part of said information being dependent upon said preferences code.

8. Network-device according to claim 7, characterised in that said first part and said second part at least partly coincide.

9. Network-device according to claim 6, 7 or 8, characterised in that at least a third part of said information comprises speech signals, with said third part being at least partly different from at least one of said first part and said second part.

10. Network-device according to claim 6, 7, 8 or 9, characterised in that at least one of said terminal-definition code and said preferences code is adjustable.
